# EUROPÄISCHE PATENTSCHRIFT

(11) **EP 3 317 533 B1**
(45) Veröffentlichungstag und Bekanntmachung des Hinweises auf die Patenterteilung: **16.12.2020**
(21) Anmeldenummer: 16733443.2
(22) Anmeldetag: 27.06.2016
(51) Int. Cl.: F03D 80/00, F03D 13/20, F03D 80/60

(54) **WINDENERGIEANLAGE UND KÜHLVORRICHTUNG FÜR EINE WINDENERGIEANLAGE**
WIND TURBINE AND COOLING DEVICE FOR A WIND TURBINE
ÉOLIENNE ET DISPOSITIF DE REFROIDISSEMENT POUR UNE ÉOLIENNE

(30) Priorität: 01.07.2015 DE 102015212321
(43) Veröffentlichungstag der Anmeldung: 09.05.2018
(73) Patentinhaber: Wobben Properties GmbH, 26607 Aurich (DE)
(72) Erfinder: KÖNITZ, Malte, 26135 Oldenburg (DE)
(74) Vertreter: Eisenführ Speiser
(86) Internationale Anmeldenummer: PCT/EP2016/064802
(87) Internationale Veröffentlichungsnummer: WO 2017/001318

(56) Entgegenhaltungen:
- EP-A1- 2 535 580
- CN-A- 103 498 766
- DE-A1-102008 012 664

## Beschreibung

Die vorliegende Erfindung betrifft eine Windenergieanlage und eine Kühlvorrichtung für eine Windenergieanlage.

Jede Windenergieanlage weist eine Mehrzahl von Komponenten auf, welche im Betrieb Wärme erzeugen. Diese Komponenten müssen unter bestimmten Voraussetzungen wie z. B. eine hohe Außentemperatur, ein langer Betrieb bei Nennleistung etc. gekühlt werden.

In der prioritätsbegründenden deutschen Patentanmeldung hat das Deutsche Patent- und Markenamt die folgenden Dokumente recherchiert: DE 10 2008 035 350 A1, AT 513 671 B1, US 2010/0308596 A1 und US 2013/0009405 A1.

DE 10 2008 012 664 A1 zeigt eine Windenergieanlage mit einem Turm und einer Wandung und einer Kühlvorrichtung. Die Kühlvorrichtung weist einen Lufteinlass und einen Luftauslass auf, welcher im unteren Bereich des Turms vorgesehen sind. Die Lufteinlasseinheit und die Luftauslasseinheit weist einen äußeren Abschnitt, einen mittleren Abschnitt und eine Jalousieeinheit auf.

CN 103 498 766 A zeigt einen Turm einer Windenergieanlage mit einer Kühlvorrichtung, einer Lufteinlasseinheit und einer Luftauslasseinheit.

Es ist eine Aufgabe der vorliegenden Erfindung, eine Windenergieanlage sowie eine Kühlvorrichtung für eine Windenergieanlage vorzusehen, welche eine effektive Kühlung der Windenergieanlage ermöglicht.

Diese Aufgabe wird durch eine Windenergieanlage nach Anspruch 1 sowie durch eine Kühlvorrichtung für eine Windenergieanlage nach Anspruch 5 gelöst.

Somit wird eine Windenergieanlage mit einem Turm, der eine Wandung aufweist, eine Kühlvorrichtung mit einer Lufteinlasseinheit und einer Luftauslasseinheit, welche im unteren Bereich des Turms vorgesehen sind, vorgesehen. Die Lufteinlasseinheit und die Luftauslasseinheit weisen jeweils einen äußeren Abschnitt, einen mittleren Abschnitt und eine Jalousieeinheit auf. Die äußeren Abschnitte sind außerhalb der Wandung des Turms, die mittleren Abschnitte sind im Bereich der Wandung des Turms und die Jalousieeinheiten sind innerhalb des Turms vorgesehen. Die Lufteinlasseinheit und die Luftauslasseinheit weisen Befestigungseinheiten auf, mittels welcher die mittleren Abschnitte aus dem Inneren des Turms heraus an der Wandung des Turms befestigt werden können.

Gemäß einem Aspekt der vorliegenden Erfindung weisen die äußeren Abschnitte mindestens ein Schutzgitter auf, wobei Streben des Schutzgitters fest miteinander verschweißt sind.

Gemäß einem weiteren Aspekt der vorliegenden Erfindung weisen die Jalousieeinheiten jeweils einen Jalousierahmen, Jalousieklappen und eine Justiereinheit auf, wobei die Jalousieklappen mittels der Justiereinheit verstellbar sind.

Gemäß einem weiteren Aspekt der vorliegenden Erfindung weist die Lufteinlasseinheit und/oder die Luftauslasseinheit ein zweites Schutzgitter im Inneren des äußeren Abschnitts auf. Die Erfindung betrifft ebenfalls eine Kühlvorrichtung für eine Windenergieanlage, welche eine Lufteinlasseinheit und eine Luftauslasseinheit aufweist. Die Lufteinlasseinheit und die Luftauslasseinheit weisen jeweils einen äußeren Abschnitt, einen mittleren Abschnitt und eine Jalousieeinheit auf. Die äußeren Abschnitte sind außerhalb einer Wandung eines Turms, der mittlere Abschnitt im Bereich der Wandung eines Turms und die Jalousieeinheiten sind innerhalb des Turms anordbar.

Die Lufteinlasseinheit und die Luftauslasseinheit weisen jeweils Befestigungseinheiten auf, mittels welcher die mittleren Abschnitte aus dem Inneren des Turms heraus an der Wandung des Turms befestigbar sind.

Die Erfindung betrifft den Gedanken, einen Lufteinlass und einen Luftauslass für eine Kühlvorrichtung im unteren Bereich eines Turms einer Windenergieanlage vorzusehen. Der Lufteinlass und der Luftauslass sollen insbesondere so ausgestaltet sein, dass sie einbruchshemmend sind. Insbesondere soll der Lufteinlass und der Luftauslass eine Widerstandsklasse von 4 aufweisen, d. h. ein Einbrecher sollte länger als 10 Minuten benötigen, um in den Lufteinlass oder den Luftauslass eindringen zu können.

Gemäß der Erfindung kann der Lufteinlass als eine Zulufthaube und der Luftauslass als eine Ablufthaube ausgestaltet sein. Der Lufteinlass kann einen Tropfenabscheider sowie einen Luftfilter in einem massiven Rahmen aufweisen. Sowohl der Lufteinlass als auch der Luftauslass können über Jalousieklappen verfügen, welche optional steuerbar sind.

Die Kühlvorrichtung kann Wärmetauscher, Lüfter, Kanäle für Kühlflüssigkeit oder Lüftungskanäle aufweisen.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß der Erfindung,
- Fig. 2: zeigt einen Abschnitt eines Turms einer Windenergieanlage,
- Fig. 3A: zeigen jeweils verschiedene Ansichten einer Lufteinlasseinheit gemäß
- bis 3P: einem ersten Ausführungsbeispiel, und
- Fig. 4A: zeigen verschiedene Ansichten einer Luftauslasseinheit gemäß
- bis 4Q: einem zweiten Ausführungsbeispiel.

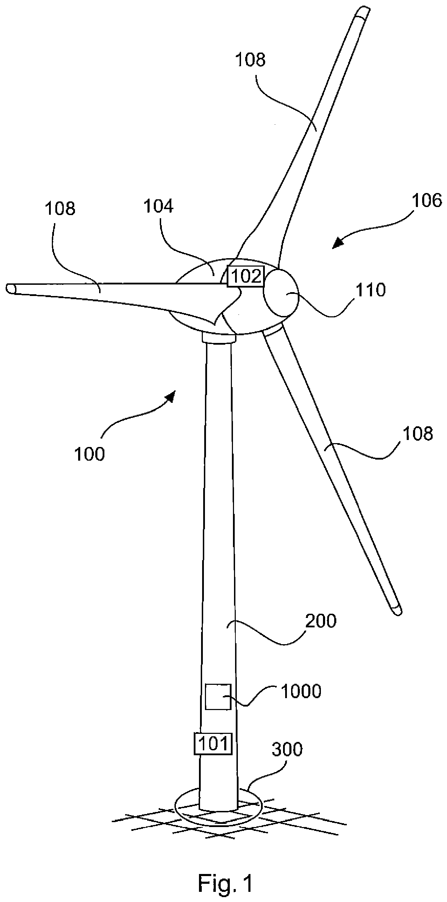

Fig. 1 zeigt eine schematische Darstellung einer Windenergieanlage gemäß der Erfindung. Die Windenergieanlage 100 weist einen Turm 200 und eine Gondel 104 auf dem Turm 200 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator 102 ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden.

Beispielsweise können der Generator 102 oder Leistungsschränke 101 (welche beispielsweise Wechselrichter, Transformatoren etc. aufweisen) während des Betriebs der Windenergieanlage eine erhebliche Wärme erzeugen, welche durch die Kühlvorrichtung 1000 gemäß der Erfindung abgeführt werden soll. Die Kühlvorrichtung kann Wärmetauscher, Lüfter, Kanäle für Kühlflüssigkeit oder Lüftungskanäle aufweisen.

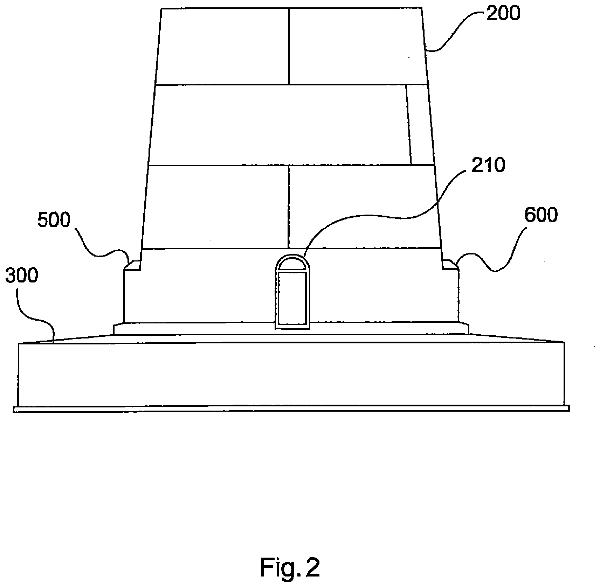

Fig. 2 zeigt einen Abschnitt eines Turms einer Windenergieanlage. Der Turm 200 weist eine Wandung 201 auf. Im unteren Bereich des Turms 200 ist beispielsweise eine Tür 210, eine Lufteinlasseinheit 500 und eine Luftauslasseinheit 600 als Teil einer Kühlvorrichtung 1000 gezeigt. Die Kühlvorrichtung 1000 weist mindestens eine Lufteinlasseinheit 500 als Lufteinlass und eine Luftauslasseinheit 600 als Luftauslass auf. Der Turm kann beispielsweise auf einem Fundament 300 platziert werden. Ein Abschnitt der Lufteinlass- oder - auslasseinheit ist außerhalb des Turms, ein Abschnitt ist in der Wandung des Turms und ein Abschnitt ist innerhalb des Turms vorgesehen.

Die Lufteinlasseinheit 500 und die Luftauslasseinheit 600 können optional gleich aufgebaut sein.

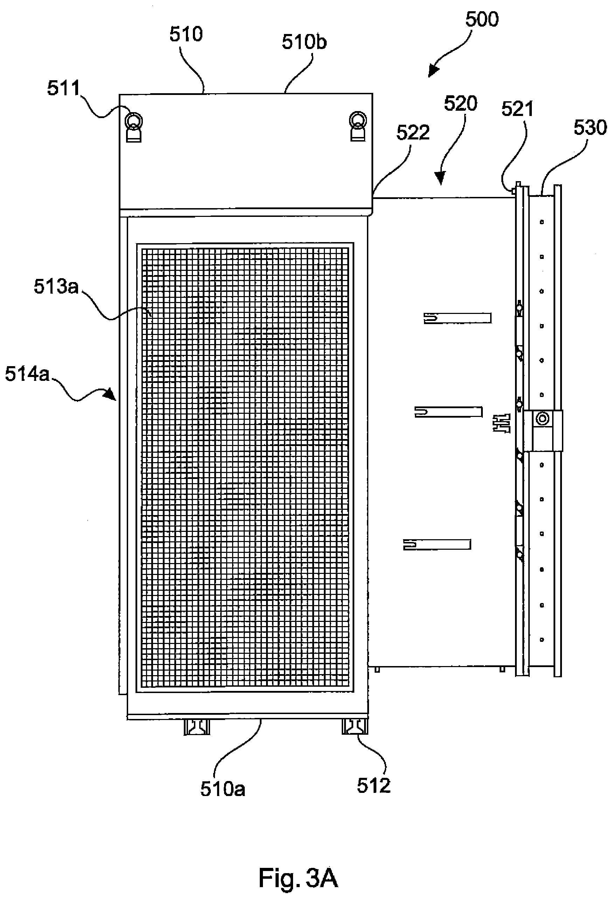

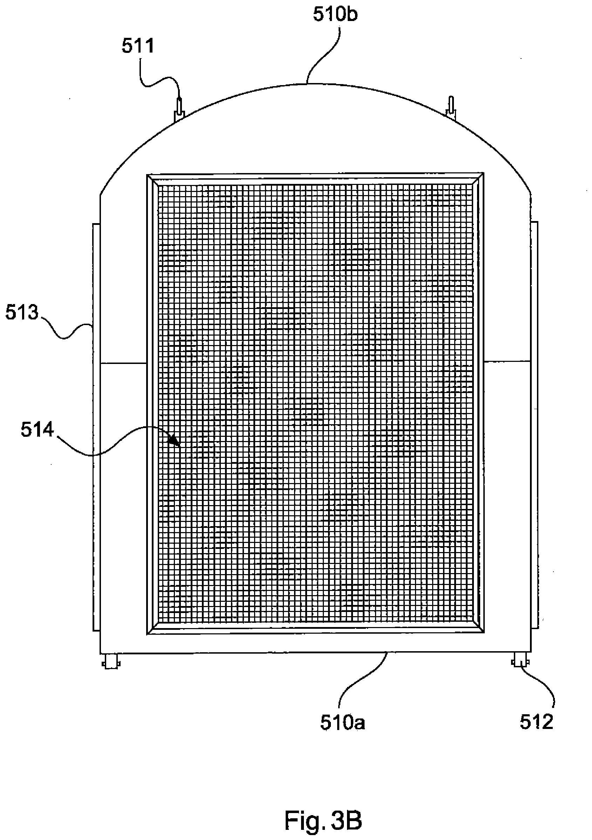

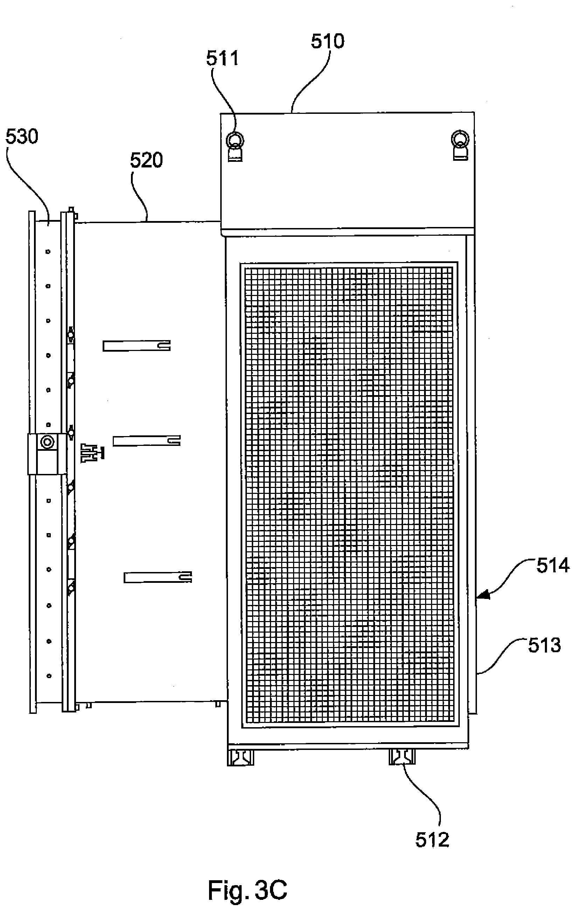

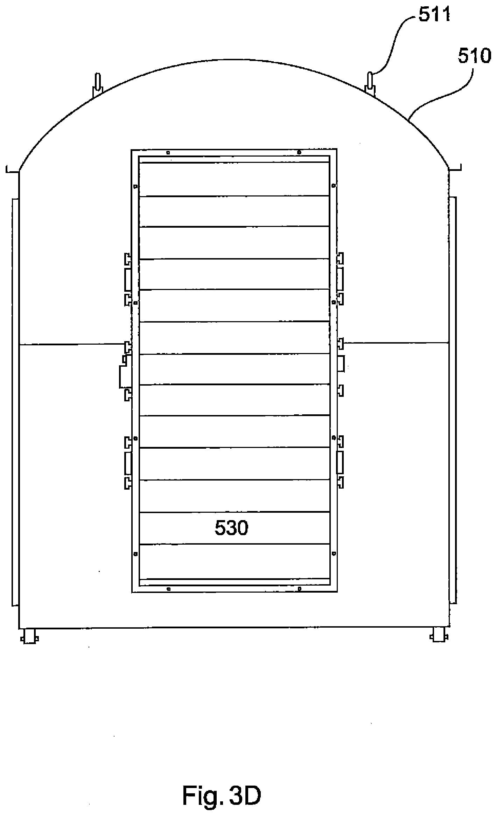

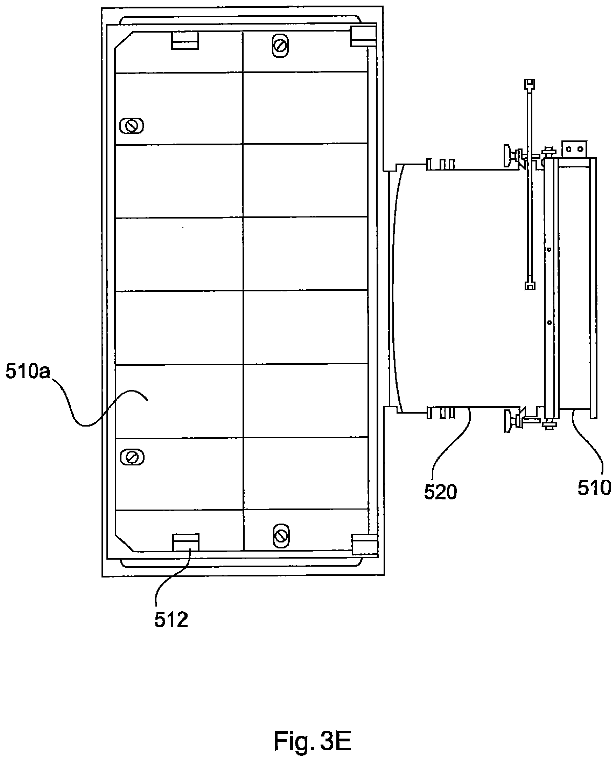

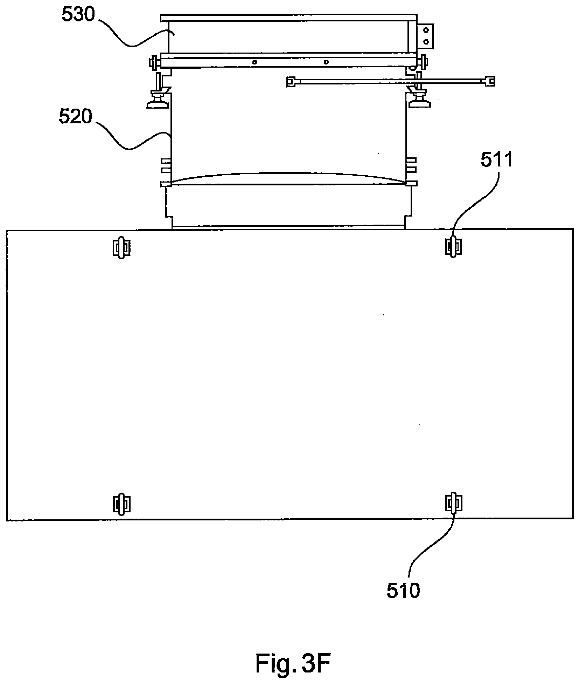

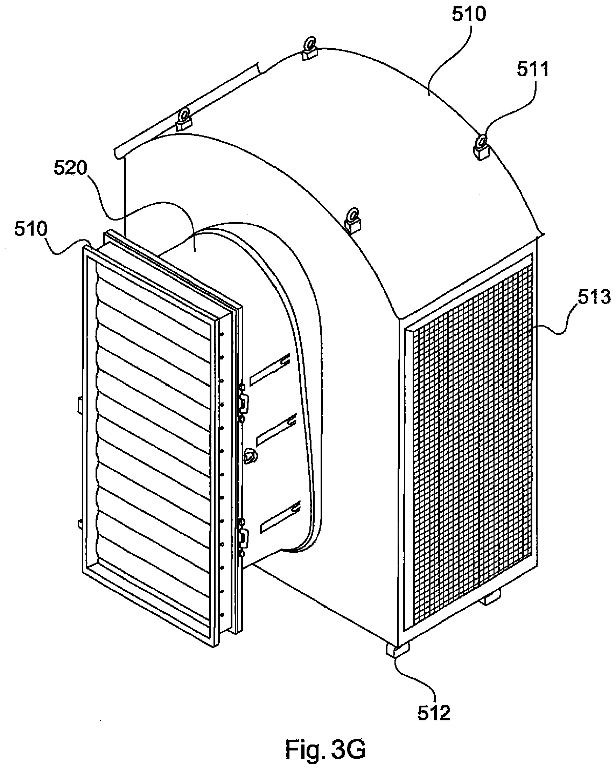

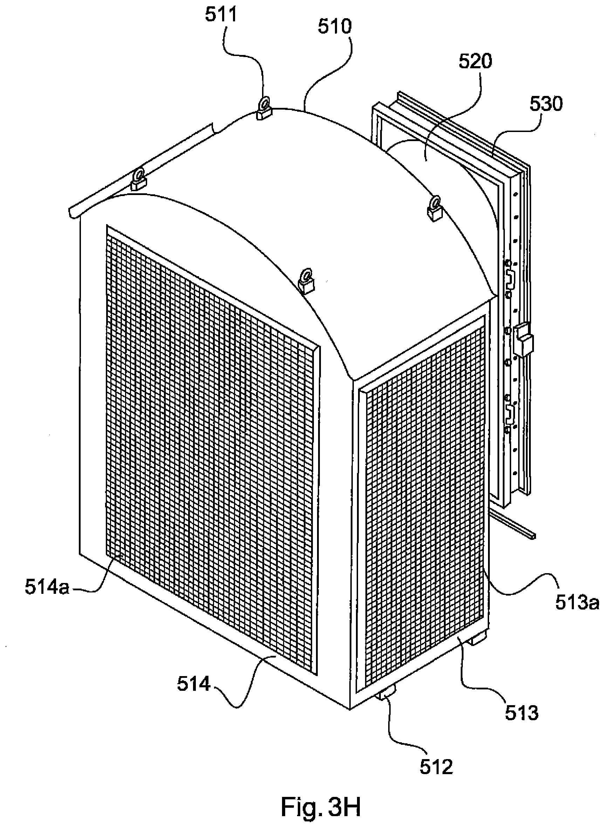

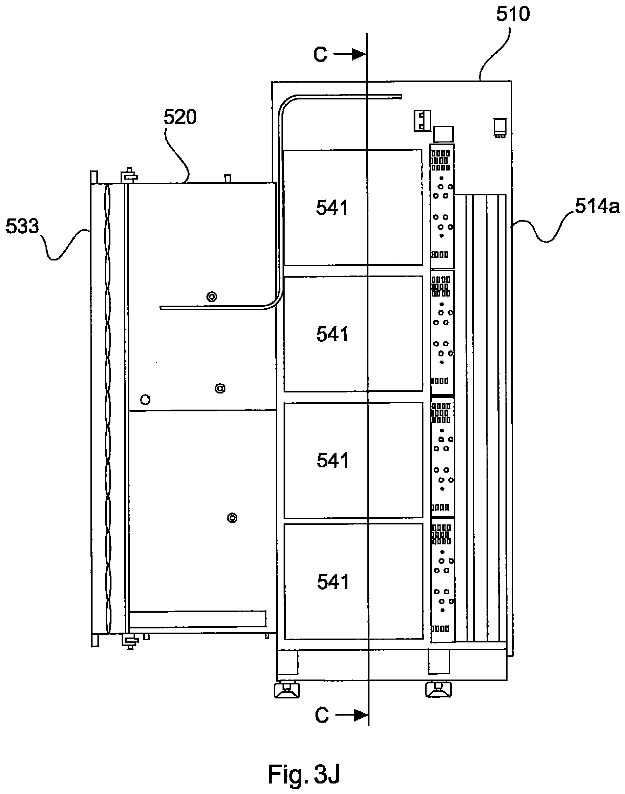

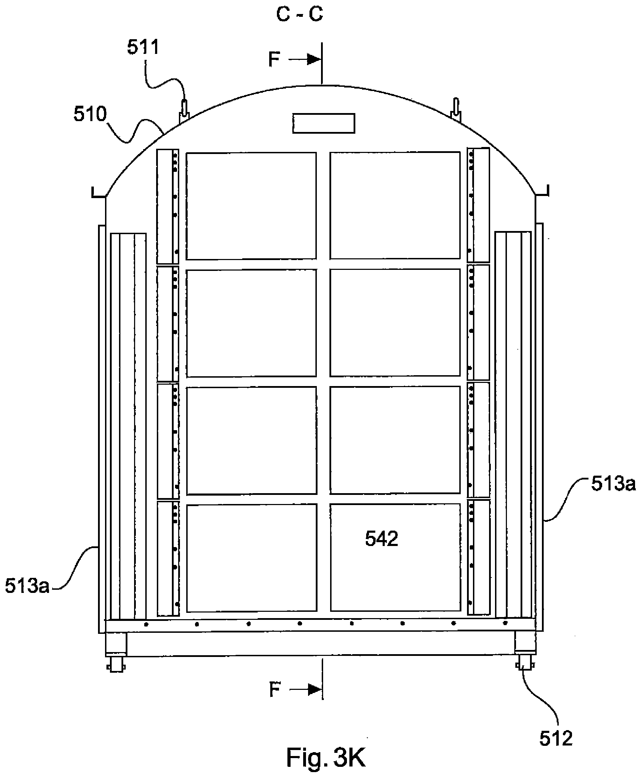

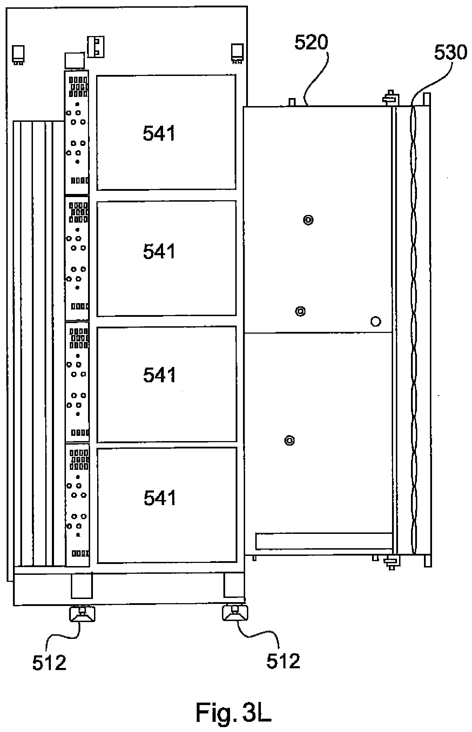

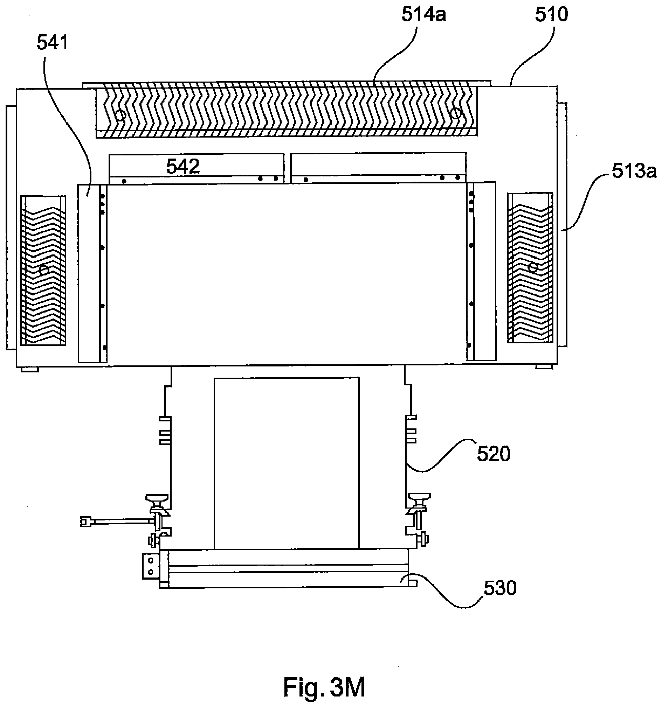

Fig. 3A bis 3H zeigen jeweils eine Außenansicht einer Lufteinlasseinheit gemäß einem ersten Ausführungsbeispiel. Die Lufteinlasseinheit kann als Zulufthaube ausgestaltet sein und die Lufteinlasseinheit 500 weist eine Jalousieeinheit 530, einen mittleren Abschnitt 520 sowie einen Außenabschnitt 510 auf. Der Außenabschnitt 510 befindet sich im eingebauten Zustand außerhalb der Wandung 201 des Turms 200 der Windenergieanlage. Der mittlere Abschnitt 520 befindet sich im eingebauten Zustand innerhalb der Wandung 201 des Turms 200 der Windenergieanlage und die Jalousieeinheit 530 ragt in das Innere des Turms 200 der Windenergieanlage hinein. Der Außenabschnitt 510 weist einen Boden 510a und einen oberen Abschnitt 510b auf. Im oberen Abschnitt 510b können Hebeösen 511 zum Transport vorgesehen sein. Am Boden 510a können Transportschutzeinheiten 512 vorgesehen sein. Der äußere Abschnitt 510 weist zwei Seitenflächen 513 und eine vordere Fläche 514 auf. Die Seitenflächen 513 sowie die vordere Fläche 514 weisen jeweils als Einbruchs- und Vandalismusschutz ein vollständig verschweißtes Schutzgitter 513a und 514a auf.

Am Boden 510a können Stellfüße mit einem Transportschutz 512 vorgesehen sein.

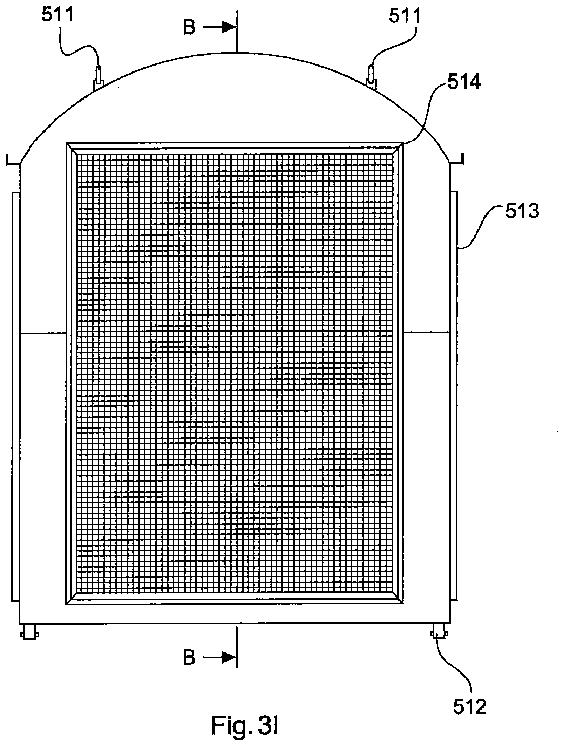

Fig. 3I bis 3M zeigen verschiedene Schnittansichten der Lufteinlasseinheit gemäß dem zweiten Ausführungsbeispiel. Innerhalb des äußeren Abschnitts 510 bzw. hinter den Schutzgittern 513a, 514a ist eine Mehrzahl von Luftfiltern 541, 542 vorgesehen. Die Luftfilter 541, 542 können sowohl untereinander als auch mit dem äußeren Abschnitt 510 vernietet sein.

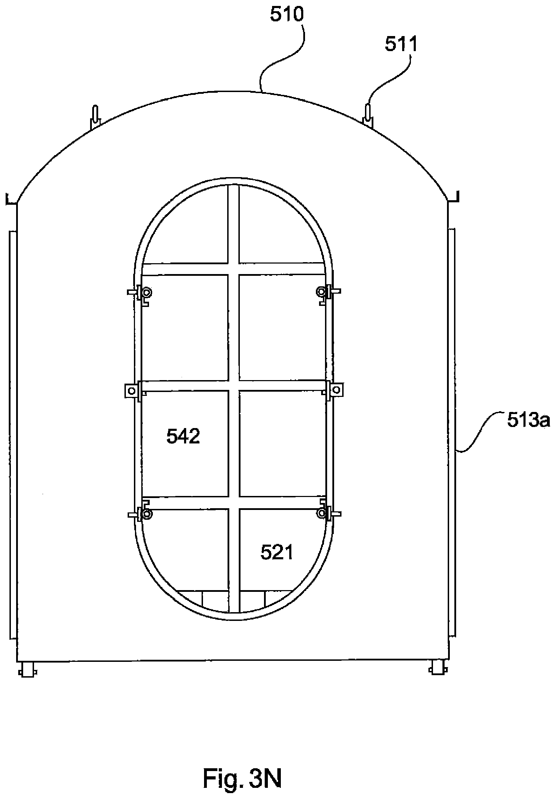

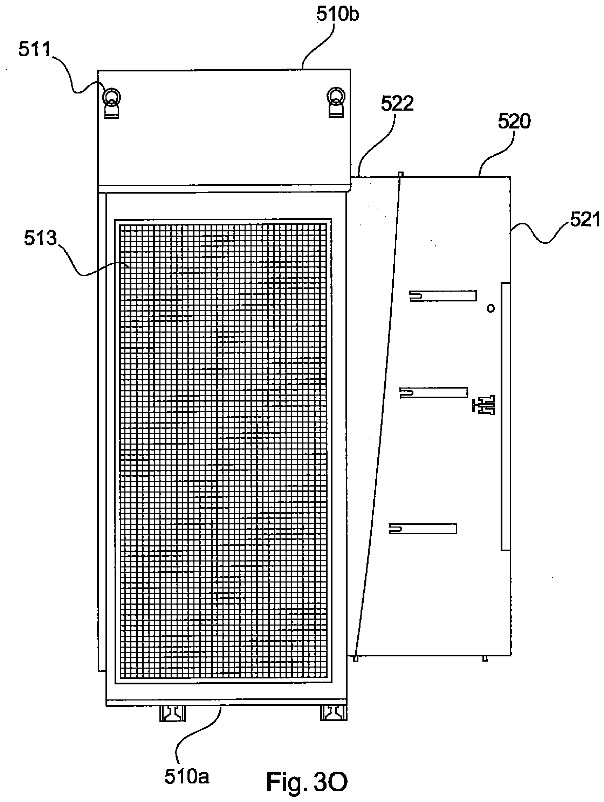

Fig. 3N und 3O zeigen jeweils eine Ansicht der Zulufteinheit, wobei die Jalousieeinheit nicht montiert ist.

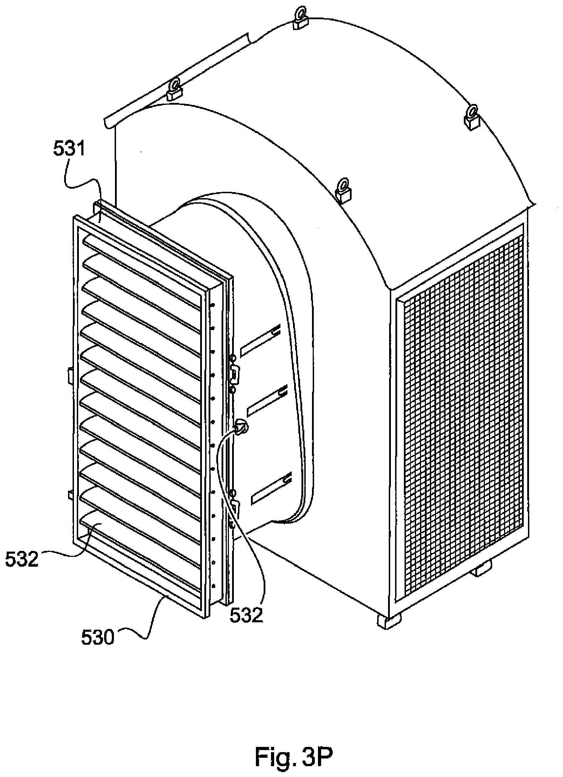

Fig. 3P zeigt eine schematische Darstellung einer Zulufteinheit mit der Jalousieeinheit 530, wobei die Jalousieklappen 532 geöffnet sind.

Die Lufteinlasseinheit 500 kann (beispielsweise wenn die Jalousieeinheit 530 demontiert ist) von außen in eine Öffnung in einer Turmwandung des Turms 200 eingeführt werden. Der mittlere Abschnitt 520 kann eine Mehrzahl von Befestigungseinheiten 525 aufweisen, mittels welcher der mittlere Abschnitt 520 aus dem Inneren der Turmwandung fest an der Turmwandung befestigt bzw. verschraubt wird. Diese Befestigung ist so ausgelegt, dass sie nicht von außen gelöst werden kann. Somit kann die Luftzufuhreinheit 500 nicht von außerhalb der Turmwandung demontiert werden.

Die Schutzgitter 513a, 514a können massive Streben aufweisen, welche verschweißt sind und beispielsweise eine Maschenweite von < 100 x 100 mm aufweisen.

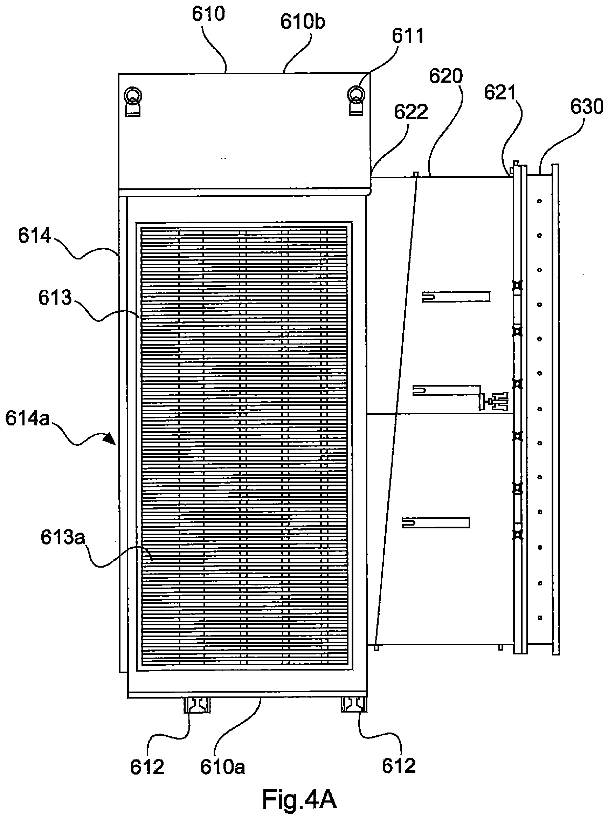

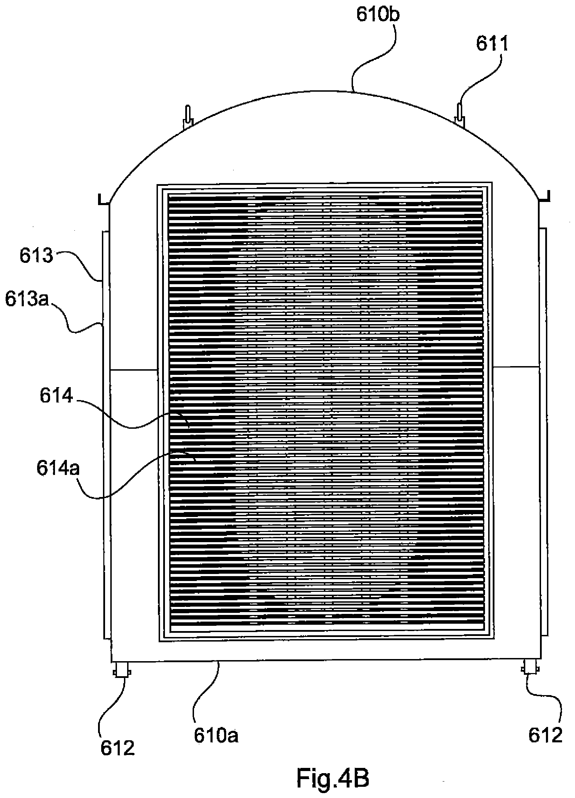

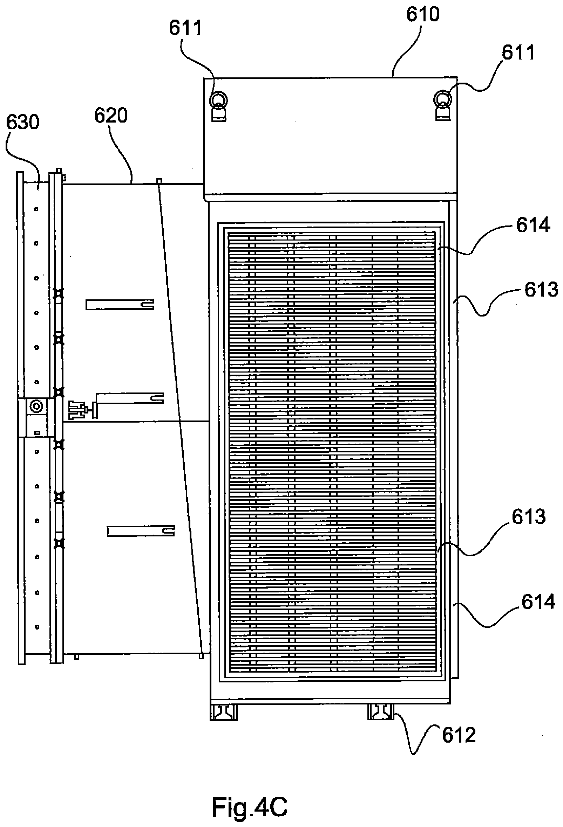

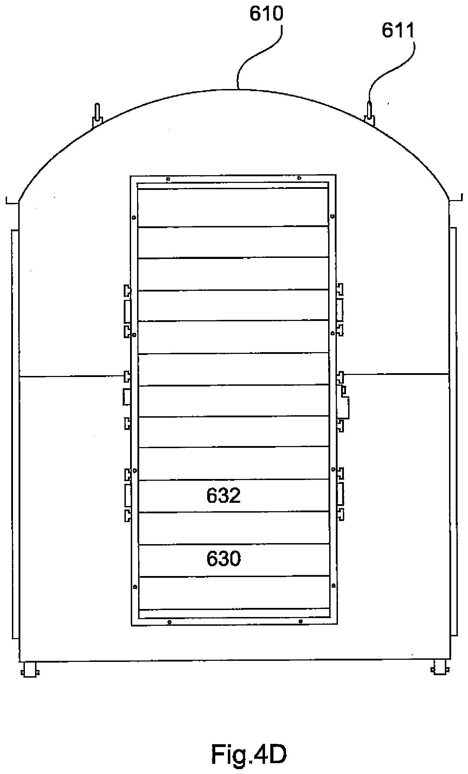

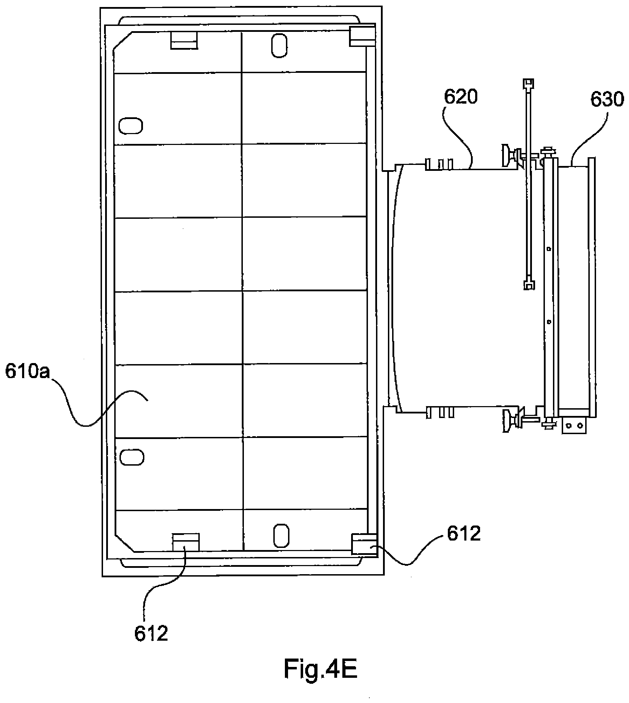

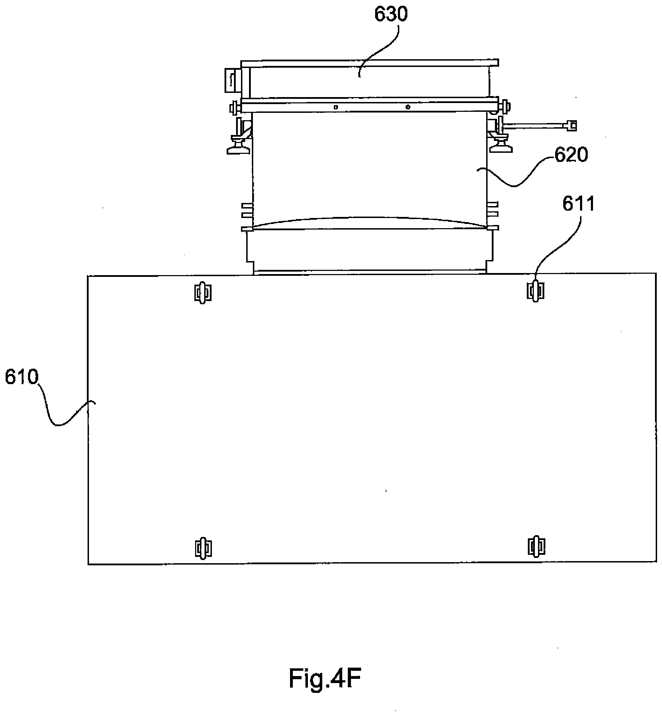

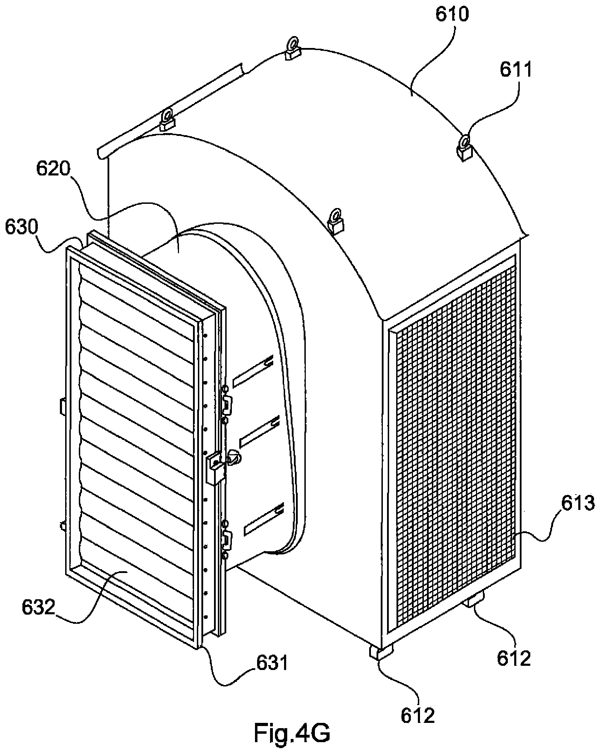

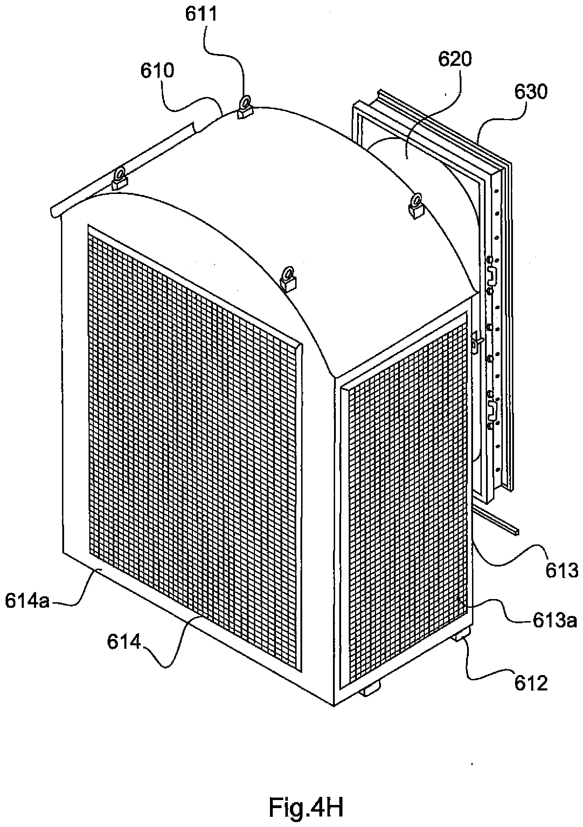

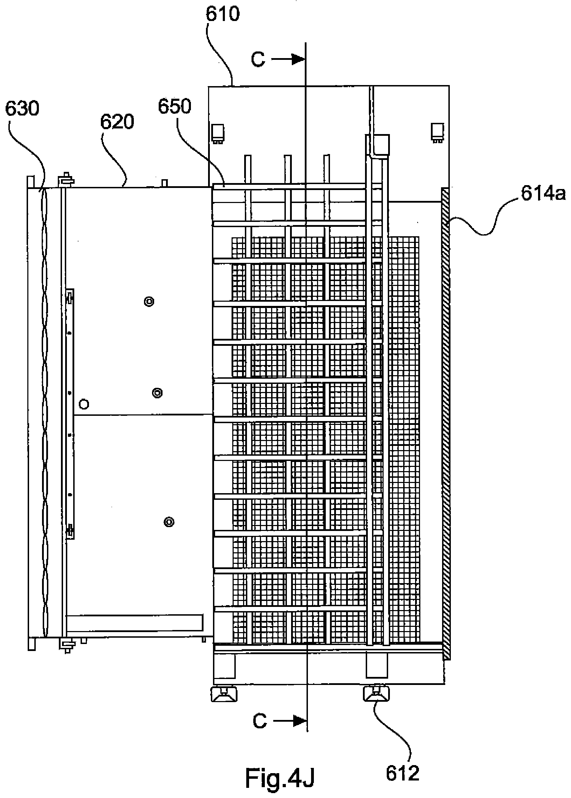

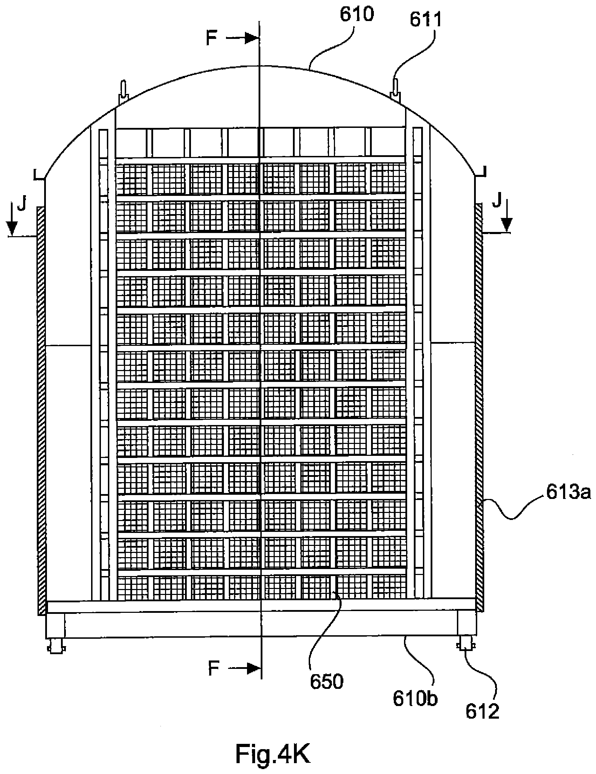

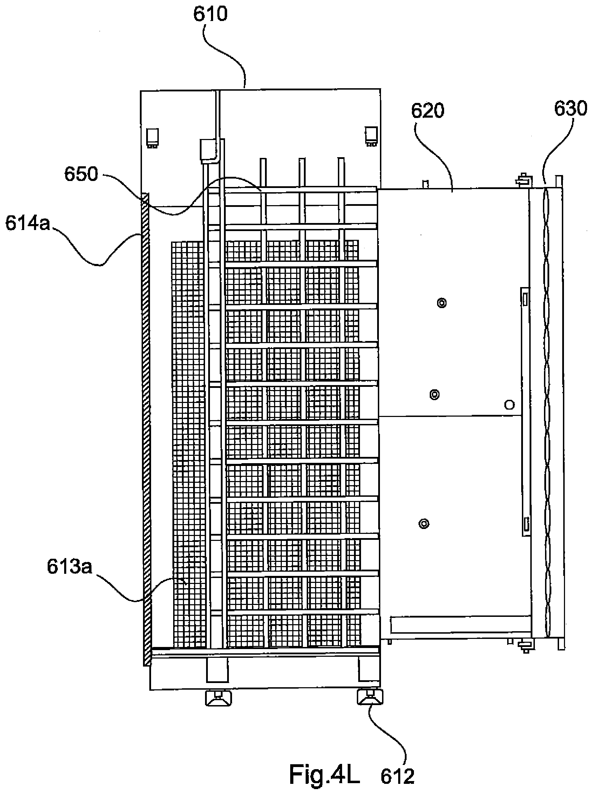

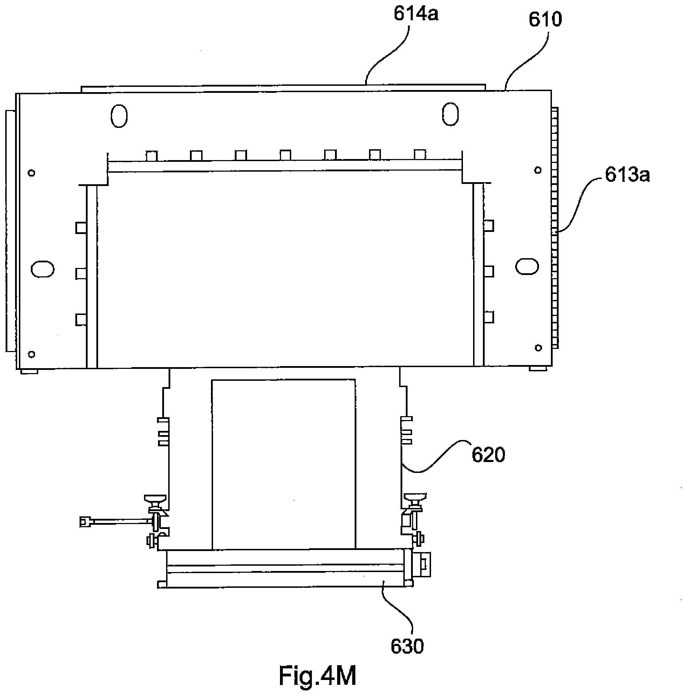

Fig. 4A bis 4H zeigen jeweils eine Außenansicht einer Luftauslasseinheit gemäß einem zweiten Ausführungsbeispiel. Die Luftauslasseinheit 600 kann als Zulufthaube ausgestaltet sein und die Luftauslasseinheit 600 weist eine Jalousieeinheit 630, einen mittleren Abschnitt 620 sowie einen Außenabschnitt 610 auf. Der Außenabschnitt 610 befindet sich im eingebauten Zustand außerhalb der Wandung des Turms der Windenergieanlage. Der mittlere Abschnitt 620 befindet sich im eingebauten Zustand innerhalb der Wandung des Turms 200 der Windenergieanlage und die Jalousieeinheit 630 ragt in das Innere des Turms der Windenergieanlage hinein. Der Außenabschnitt 610 weist einen Boden 610a und einen oberen Abschnitt 610b auf. Im oberen Abschnitt 610b können Hebeösen 611 zum Transport vorgesehen sein. Am Boden 610a können Transportschutzeinheiten 612 vorgesehen sein. Der äußere Abschnitt 610 weist zwei Seitenflächen 613 und eine vordere Fläche 614 auf. Die Seitenflächen 613 sowie die vordere Fläche 614 weisen jeweils als Einbruchs- und Vandalismusschutz ein vollständig verschweißtes Schutzgitter 613a und 614a auf.

Am Boden 610a können Stellfüße 612 mit einem Transportschutz vorgesehen sein.

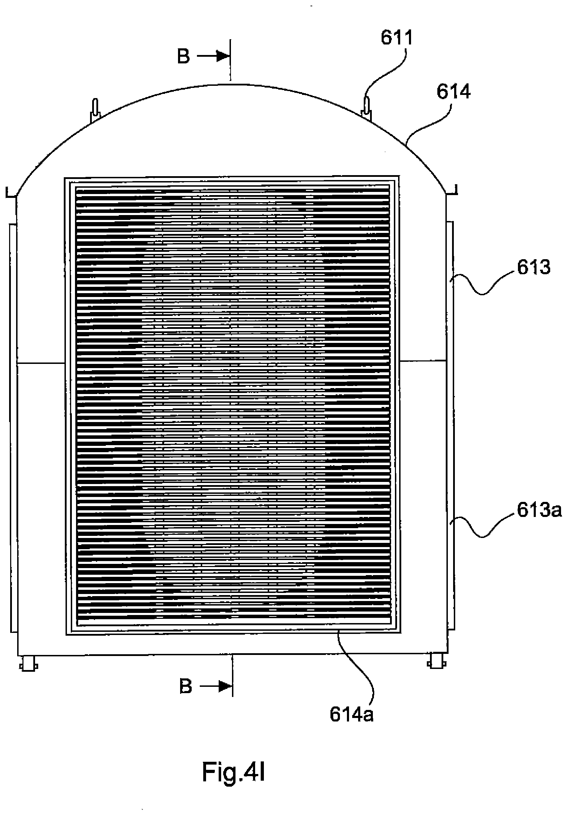

Fig. 4I bis 4M zeigen verschiedene Schnittansichten der Luftauslasseinheit gemäß dem zweiten Ausführungsbeispiel. Innerhalb des äußeren Abschnitts 610 bzw. hinter den Schutzgittern 613a, 614a ist ein Schutzgitter 650 vorgesehen, welches aus einer Mehrzahl von verschweißten Stahl- oder Metallstreben besteht und zwischen den Schutzgittern 613a, 614a und dem mittleren Abschnitt 620 vorgesehen ist. Die Luftfilter 641, 642 können sowohl untereinander als auch mit dem äußeren Abschnitt 610 vernietet sein.

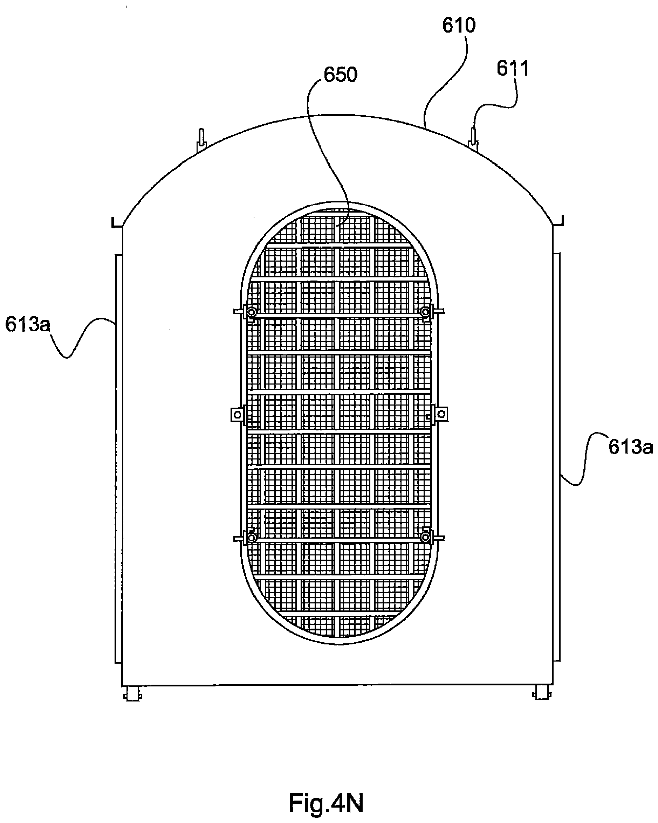

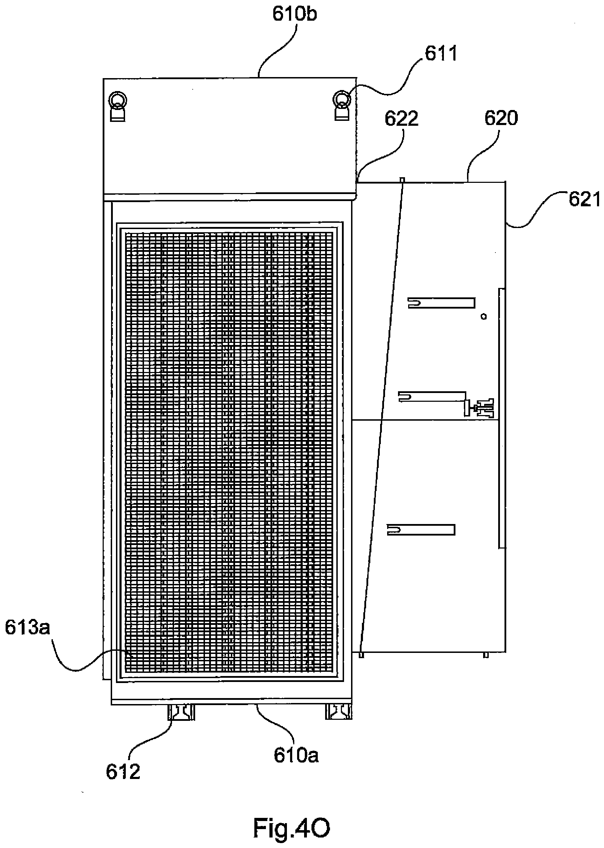

Fig. 4N und 4O zeigen jeweils eine Ansicht der Ablufteinheit, wobei die Jalousieeinheit nicht montiert ist.

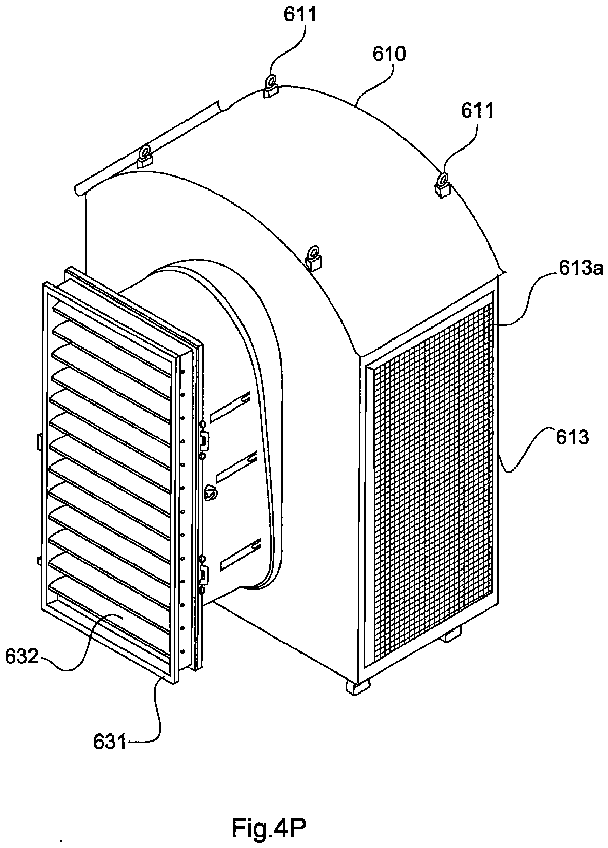

Fig. 4P zeigt eine schematische Darstellung einer Ablufteinheit mit der Jalousieeinheit 630, wobei die Jalousieklappen 632 geöffnet sind.

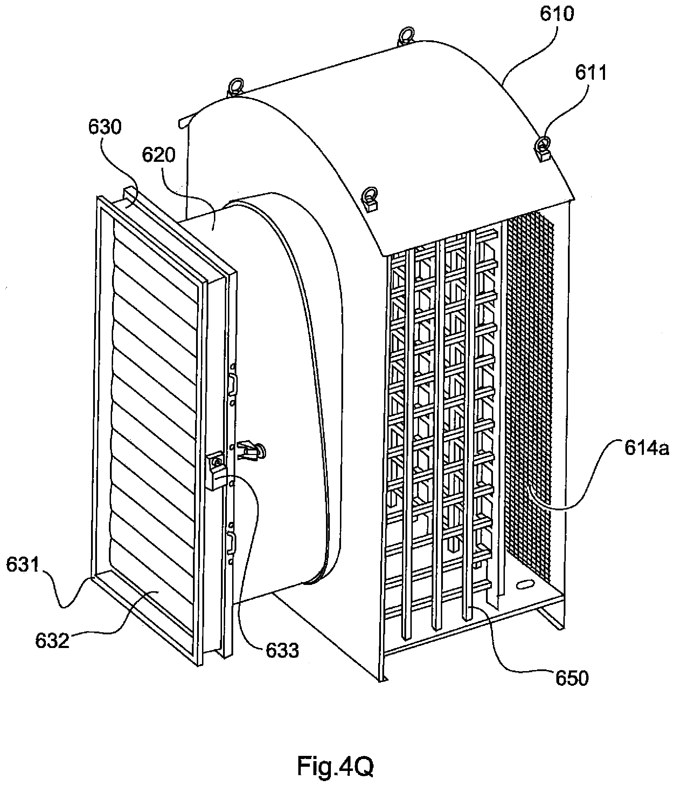

Fig. 4Q zeigt eine schematische Darstellung einer Ablufteinheit 600 gemäß dem zweiten Ausführungsbeispiel. Im Inneren des äußeren Abschnitts 610 ist ein Gitter aus verschweißten Stahl- oder Eisenstreben 450 vorgesehen. Dieses Gitter 450 soll einem weiteren Einbruchs- und Vandalismusschutz dienen. Selbst wenn Einbrecher die äußeren Gitter 614a, 613a entfernt haben, so müssen sie danach das weitere Gitter 650 überwinden, um in die Anlage zu gelangen.

Gemäß einem Aspekt der vorliegenden Erfindung weist die Kühlvorrichtung 1000 neben der Lufteinlasseinheit 500 und/oder der Luftauslasseinheit 600 weitere Komponenten, welche zum Kühlen des Generators 102 und/oder der Leistungsschränke 101 benötigt werden, auf. Die Kühlvorrichtung 1000 kann somit Wärmetauscher, Lüfter, Kanäle für eine Kühlflüssigkeit oder Lüftungskanäle aufweisen. Die Wärmetauscher der Kühlungsvorrichtung können über Kühlflüssigkeitskanäle oder Lüftungskanäle oder dergleichen mit der Lufteinlasseinheit 500 und/oder Luftauslasseinheit 600 gekoppelt sein. Die Lufteinlasseinheit 500 und/oder die Luftauslasseinheit 600 kann optional Wärmetauscher bzw. Wärmeübertrager aufweisen, um die Wärme der Kühlfüssigkeit oder die Wärme aus der Luft nach außen abzuführen.

Die vorliegende Erfindung betrifft insbesondere die Lufteinlasseinheit und/oder die Luftauslasseinheit der Kühlvorrichtung für eine Windenergieanlage. Die weitere Ausgestaltung der Kühlvorrichtung im Inneren der Windenergieanlage kann beliebig ausgestaltet sein.

## Patentansprüche

1. Windenergieanlage, mit
einem Turm (200) mit einer Wandung (201),
einer Kühlvorrichtung (1000), die mindestens eine Lufteinlasseinheit (500) und mindestens eine Luftauslasseinheit (600) aufweist, welche im unteren Bereich des Turms (200) vorgesehen sind,
wobei die Lufteinlasseinheit (500) und die Luftauslasseinheit (600) jeweils einen äußeren Abschnitt (510, 610), einen mittleren Abschnitt (520, 620) und eine Jalousieeinheit (530, 630) aufweist,
wobei die äußeren Abschnitte (510, 610) außerhalb der Wandung (201) des Turms (200) und die mittleren Abschnitte im Bereich der Wandung (201) des Turms (200) vorgesehen sind,
wobei die Lufteinlasseinheit (500) und die Luftauslasseinheit (600) Befestigungseinheiten aufweisen,
**dadurch gekennzeichnet, dass** die Jalousieeinheiten (530, 630) innerhalb des Turms (200) vorgesehen sind,
wobei die mittleren Abschnitte (520, 620) aus dem Inneren des Turms (200) heraus mittels der Befestigungseinheiten an der Wandung (201) des Turms (200) befestigbar sind.

2. Windenergieanlage nach Anspruch 1, wobei
die äußeren Abschnitte (510, 610) mindestens ein Schutzgitter (513a, 514a; 613a, 614a) aufweisen und Streben des Schutzgitters (513a, 514a, 613a, 614a) fest miteinander verschweißt sind.

3. Windenergieanlage nach Anspruch 1 oder 2, wobei
die Jalousieeinheiten (530, 630) jeweils einen Jalousierahmen (531, 631), Jalousieklappen (532, 632) und eine Justiereinheit (533, 633) aufweisen, wobei die Jalousieklappen (532, 632) mittels der Justiereinheit (533, 633) verstellbar sind.

4. Windenergieanlage nach einem der Ansprüche 1 bis 3, wobei
die Lufteinlasseinheit (500) und/oder die Luftauslasseinheit (600) ein zweites Schutzgitter (550, 650) im Inneren des äußeren Abschnittes (510, 610) aufweist.

5. Verwendung einer Kühlvorrichtung (1000) für eine Windenergieanlage, wobei
die Kühlvorrichtung eine Lufteinlasseinheit (500) und eine Luftauslasseinheit (600) aufweist,
wobei die Lufteinlasseinheit (500) und die Luftauslasseinheit (600) jeweils einen äußeren Abschnitt (510, 610), einen mittleren Abschnitt (520, 620) und eine Jalousieeinheit (530, 630) aufweist,
wobei die äußeren Abschnitte (510, 610) außerhalb einer Wandung (201) eines Turms (200), der mittlere Abschnitt im Bereich der Wandung (201) des Turms (200) und die Jalousieeinheiten (530, 630) innerhalb des Turms (200) anordbar sind,
wobei die Lufteinlasseinheit (500) und die Luftauslasseinheit (600) Befestigungseinheiten aufweisen, mittels welcher die mittleren Abschnitte (520, 620) aus dem Inneren des Turms (200) heraus an der Wandung (201) des Turms (200) befestigbar sind.

## Claims

1. A wind turbine comprising
a tower (200) having a wall (201),
a cooling device (1000) which has at least one air inlet unit (500) and at least one air outlet unit (600) which are provided in the lower region of the tower (200),
wherein the air inlet unit (500) and the air outlet unit (600) each have an outer portion (510, 610), a central portion (520, 620) and a shutter unit (530, 630),
wherein the outer portions (510, 610) are provided outside the wall (201) of the tower (200), and the central portions (520, 520) are provided in the region of the wall (201) of the tower (200),
wherein the air inlet unit (500) and the air outlet unit (600) have fixing units,
**characterized in that** the shutter units (530, 630) are provided within the tower (200),
wherein the central portions (520, 620) can be fixed to the wall (201) of the tower (200) from the interior of the tower (200) by means of the fixing units.

2. A wind turbine according to claim 1
wherein the outer portions (510, 610) have at least one protective grid (513a, 514a; 613a, 614a) and bars of the protective grid (513a, 514a; 613a, 614a) are fixedly welded together.

3. A wind turbine according to claim 1 or claim 2
wherein the shutter units (530, 630) each have a shutter frame (531, 631), shutter flaps (532, 632) and an adjusting unit (533, 633), wherein the shutter flaps (532, 632) are displaceable by means of the adjusting unit (533, 633).

4. A wind turbine according to one of claims 1 to 3 wherein
the air inlet unit (500) and/or the air outlet unit (600) has a second protective grid (550, 650) in the interior of the outer portion (510, 610).

5. Use of a cooling device (1000) for a wind turbine
wherein the cooling device comprises an air inlet unit (500) and air outlet unit (600),
wherein the air inlet unit (500) and the air outlet unit (600) each have an outer portion (510, 610), a central portion (520, 620) and shutter unit (530, 630),
wherein the outer portions (510, 610) can be arranged outside a wall (201) of a tower (200), the central portion can be arranged in the region of the wall (201) of the tower (200) and the shutter units (530, 630) can be arranged within the tower (200),
wherein the air inlet unit (500) and the air outlet unit (600) have fixing units, by means of which the central portions (520, 620) can be fixed to the wall (201) of the tower (200) from the interior of the tower (200).

## Revendications

1. Éolienne avec
une tour (200) avec une paroi (201),
un dispositif de refroidissement (1000), qui présente au moins une unité d'entrée d'air (500) et au moins une unité de sortie d'air (600), lesquelles sont prévues dans une zone inférieure de la tour (200),
dans laquelle l'unité d'entrée d'air (500) et l'unité de sortie d'air (600) présentent respectivement une section extérieure (510, 610), une section centrale (520, 620) et une unité de volet (530, 630),
dans laquelle les sections extérieures (510, 610) sont prévues à l'extérieur de la paroi (201) de la tour (200) et les sections centrales sont prévues dans la zone de la paroi (201) de la tour (200),
dans laquelle l'unité d'entrée d'air (500) et l'unité de sortie d'air (600) présentent des unités de fixation,
**caractérisée en ce que**
les unités de volet (530, 630) sont prévues à l'intérieur de la tour (200),
dans laquelle les sections centrales (520, 620) peuvent être fixées au niveau de la paroi (201) de la tour (200) au moyen des unités de fixation depuis l'intérieur de la tour (200).

2. Éolienne selon la revendication 1, dans laquelle
les sections extérieures (510, 610) présentent au moins une grille de protection (513a, 514a ; 613a, 614a) et des entretoises de la grille de protection (513a, 514a, 613a, 614a) sont soudées les unes aux autres de manière solidaire.

3. Éolienne selon la revendication 1 ou 2, dans laquelle
les unités de volet (530, 630) présentent respectivement un cadre de volet (531, 631), des ouvrants de volet (532, 632) et une unité d'ajustement (533, 633), dans laquelle les ouvrants de volet (532, 632) peuvent être ajustés au moyen de l'unité d'ajustement (533, 633).

4. Éolienne selon l'une quelconque des revendications 1 à 3, dans laquelle
l'unité d'entrée d'air (500) et/ou l'unité de sortie d'air (600) présentent une deuxième grille de protection (550, 650) dans l'intérieur de la section extérieure (510, 610).

5. Utilisation d'un dispositif de refroidissement (1000) pour une éolienne, dans laquelle
le dispositif de refroidissement présente une unité d'entrée d'air (500) et une unité de sortie d'air (600),
dans laquelle l'unité d'entrée d'air (500) et l'unité de sortie d'air (600) présentent respectivement une section extérieure (510, 610), une section centrale (520, 620) et une unité de volet (530, 630),
dans laquelle les sections extérieures (510, 610) peuvent être disposées à l'extérieur d'une paroi (201) d'une tour (200), la section centrale peut être disposée dans la zone de la paroi (201) de la tour (200) et les unités de volet (530, 630) peuvent être disposées à l'intérieur de la tour (200),
dans laquelle l'unité d'entrée d'air (500) et l'unité de sortie d'air (600) présentent des unités de fixation, au moyen desquelles les sections centrales (520, 620) peuvent être fixées au niveau de la paroi (201) de la tour (200) depuis l'intérieur de la tour (200) .
